# EUROPEAN PATENT SPECIFICATION

(11) **EP 4 196 772 B1**
(45) Date of publication and mention of the grant of the patent: **16.10.2024**
(21) Application number: 21740009.2
(22) Date of filing: 02.07.2021
(51) Int. Cl.: G01N 21/84

(54) **TESTING OF CENTRAL HEATING SYSTEM WATER**
PRÜFUNG VON WASSER EINER ZENTRALHEIZUNG
TEST D'EAU DE SYSTÈME DE CHAUFFAGE CENTRAL

(30) Priority: 11.08.2020 GB 202012454
(43) Date of publication of application: 21.06.2023
(73) Proprietor: Adey Holdings (2008) Limited, Stonehouse, Gloucestershire GL10 3EZ (GB)
(72) Inventor: JASSAL, Mo, Stonehouse, Gloucestershire GL10 3EZ (GB); BLANDON, Hannah, Stonehouse, Gloucestershire GL10 3EZ (GB); BACON, Dan, Stonehouse, Gloucestershire GL10 3EZ (GB); FOOT, James, Bristol BS1 4NH (GB); RUBY, Natacha, Bristol BS1 4NH (GB); FARMER, Andy, Bristol BS1 4NH (GB)
(74) Representative: Maidment, Marc
(86) International application number: PCT/EP2021/068300
(87) International publication number: WO 2022/033765

(56) References cited:
- WO-A1-2020/003021
- GB-A- 2 576 942

## Description

The present invention relates to the testing of central heating system water, in particular to ensure that corrosion inhibitor is present in the correct quantity.

### BACKGROUND TO THE INVENTION

It is known to test central heating and/or cooling system water for the presence and concentration of a variety of different chemicals. For example, known colour-change "dip tests" can be used to measure the pH of the water, and the concentration of iron, copper, and a corrosion inhibitor. Typically a corrosion inhibitor contains molybdate, and the molybdate concentration is used to determine whether inhibitor is present in the correct quantity in the system water.

A "dip test" is in the form of a pad impregnated with a reagent, which in turn is mounted on a stick to act as a carrier. The pad is dipped in a sample of the liquid to be tested, and the impregnated pad then changes colour. The colour of the pad can be compared to a reference to determine the concentration of the particular chemical being tested for, the pH value, etc.

The applicant's co-pending application GB2576942 describes methods for digital assessment of such dip tests, for example using a mobile phone with a camera to take a picture of the dipped test alongside a colour reference scale, and determining the level of various chemicals being tested for according to a comparison between the colour of the dipped test and the colour reference scale, and stored information mapping points on the colour reference scale to amounts of chemical indicated.

GB2576942 A relates to digital assessment of chemical dip tests, particularly to assessment dip tests conducted on central heating and/or cooling system water, using a mobile device including a digital camera.

WO2020003021 A1 relates to test strips analysis, and more particularly, to improved colorimetric based test strip analysis and reader system.

However, due to the variety of chemicals which may be found in central heating system water, and the interactions of different chemicals with the colour-change reagents, it has proved to be particularly difficult to use colour change "dip tests" to get a reliably accurate measurement of molybdate in central heating system water. It is an object of the invention to solve this problem.

### SUMMARY OF THE INVENTION

According to the present invention, there is provided a method of testing central heating and/or cooling system water for the concentration of molybdate, comprising the steps of:
using a first colour-change dip test to test for the concentration of iron in the central heating and/or cooling system water, and comparing the colour of the first colour-change dip test to an iron testing reference to assess an iron concentration;
using a second colour-change dip test to test for the concentration of molybdate in the central heating and/or cooling system water, and comparing the colour of the second colour-change dip test to a molybdate testing reference, and assessing the molybdate concentration based on the comparison of the second dip test to the reference, and the assessed concentration of iron
in which the molybdate testing reference comprises a plurality of colour reference scales, a colour reference scale being selected from the plurality of colour reference scales to be used in the assessment of molybdate concentration, based on the assessed concentration of iron, and
in which assessment is carried out by image processing software based on a photograph of the colour-change dip tests alongside the references.

It is found that colour-change dip tests can be used reliably to determine the concentration of iron in central heating system water. Iron is a common contaminant in central heating system water, but can be present in widely varying concentrations depending on the size, age, type, and condition of the central heating system. Varying concentrations of iron have an effect on the colour of a molybdate dip test, but by testing for and assessing iron concentration and then taking the assessed level of iron concentration into account when assessing molybdate concentration, it is found that an accurate result can be obtained.

Multiple colour reference scales are provided for use in the comparison of the second dip test. If iron concentration is assessed within a first range, then the second colour-change dip test may be compared to a first colour reference scale, and if iron concentration is assessed within a second range, then the second colour-change dip test may be compared to a second colour reference scale. In some embodiments, there may be three or more colour reference scales for assessment of molybdate, each colour reference scale corresponding with a particular range of values of assessed iron concentration.

In an alternative unclaimed embodiment, a single colour reference scale may form the molybdate testing reference, but the mapping of assessed values for the concentration of molybdate onto the colour reference scale may be altered according to the assessed iron concentration.

Preferably, the first colour-change dip test and the second colour-change dip test may be provided as first and second pads on the same carrier. The carrier may be for example an elongate stick, which may be made from plastics or another water-resistant material. Preferably, one or more absorbent buffer pads may be provided between the first and second pads. This reduces the possibility of colour-change reagent bleeding from one pad to the other when the pads are withdrawn from a test sample.

Suitable colour reference scales may be derived by the skilled person, by making up multiple samples with known iron and molybdate concentrations, carrying out dip tests using dip test pads impregnated with suitable reagents, and deriving colour reference scales for multiple iron concentration ranges. In one embodiment, a different colour reference scale for assessment of the molybdate dip test is provided for each of the following ranges of iron concentration:
if iron concentration assessed at ≥0ppm and <5ppm, a first molybdate colour reference scale is used;
if iron concentration assessed at ≥5ppm and <10ppm, a second molybdate colour reference scale is used;
if iron concentration assessed at ≥10ppm and < 20ppm, a third molybdate colour reference scale is used; and
if iron concentration assessed at ≥20ppm, a fourth molybdate colour reference scale is used.

Multiple molybdate assessment colour reference scales, together with an iron testing colour reference scale, may be provided on a single colour reference card.

The assessment of iron level and assessment of molybdate level is carried out by way of a photograph of the dip tests next to the colour reference scales, optionally by digital assessment apparatus for example as disclosed in GB2576942.

### DESCRIPTION OF THE DRAWING

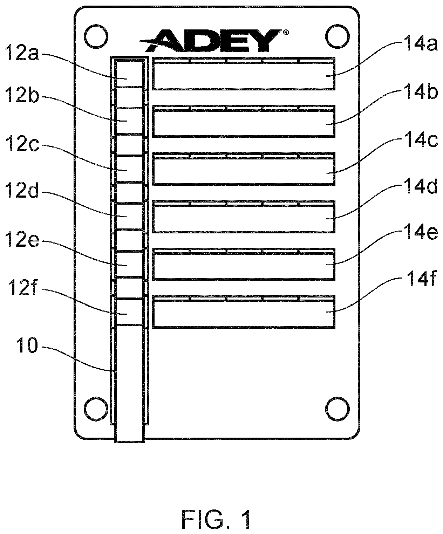

For a better understanding of the invention, and to show more clearly how it may be carried into effect, a preferred embodiment will now be described with reference to the drawing, Figure 1, which shows a dip testing carrier including multiple dip testing pads, alongside a colour reference card comprising multiple colour reference scales.

### DESCRIPTION OF THE PREFERRED EMBODIMENT

Referring to Figure 1, a carrier in the form of a plastic stick is indicated at 10. The carrier includes six colour-change dip test pads 12a, 12b, 12c, 12d, 12e, 12f. The carrier, and all the colour-change dip test pads, are dipped into a sample of central heating and/or cooling system water to be tested.

The carrier with six colour-change dip test pads is obtained from Precision Laboratories, Inc of Cottonwood, AZ 86326, USA. The dip test pads are treated with colour-change reagents designed to be sensitive to molybdate, copper, and iron, as well as three pads with different reagents designed to be sensitive to pH.

Not all of the dip test pads on this particular six-pad carrier are used directly to assess water properties in this embodiment. However, the molybdate and iron testing pads are not adjacent, and the pad in between in practice forms a buffer which prevents leaching of colour-change reagent from the molybdate pad. In another embodiment, the "buffer" pad of course does not need to be treated with any reagent itself.

The carrier 10 is shown pictured in position on a colour reference card. The colour reference card includes multiple colour reference scales 14a, 14b, 14c, 14d, 14e, 14f. Although each reference scale is shown in the drawing adjacent a particular pad, the reference scales are not necessarily used in the assessment to assess the pad which is placed adjacent to them. Since the assessment is preferably carried out by software running on a mobile device, as described in GB2576942, it does not matter that there is not an obvious correspondence between the scale being used for assessment and the pad being assessed.

Note also that there are no numbers or other references marked on the scale, since the scales are designed for use with software which will include further reference information, allowing the colour comparison with the reference card to be used to assess a quantity of chemical present.

In an unclaimed embodiment, assessment may be carried out "by eye", in which case it would be expected that numerical reference information and clear instructions would be provided on the colour reference card.

In this embodiment, colour change dip test pad 12a is treated with a reagent designed to test for the presence of iron in the water. It is found that with a suitable colour reference scale 14a, the amount of iron present can be accurately assessed in most samples of central heating system water, irrespective of other contaminants which may be present.

The amount of iron present is an important test in itself, since dissolved iron in the system water is an indication that corrosion is taking place. However, the amount of iron present is also found to be important for correct assessment of the dip-test to determine molybdate level.

In this embodiment, four of the colour reference scales shown on the card are used for assessment of the molybdate level, the colour reference scale used for assessment being chosen according to the level of iron assessed. For example, a first molybdate colour reference scale 14c is used where the iron level assessed is ≥0ppm and <5ppm, a second molybdate colour reference scale 14d is used where the iron level assessed is ≥5ppm and <10ppm, a third molybdate colour reference scale 14e is used where the iron level assessed is ≥10ppm and < 20ppm, and a fourth molybdate colour reference scale 14f is used where the iron level assessed is ≥20ppm. In this example, the colour reference scale 14b is used to assess the level of copper, based on another one of the dip test pads on the carrier 10.

Central heating system water can contain a wide range of different dissolved iron levels, and the invention allows for accurate testing to determine molybdate level, which is important to ensure a correct level of corrosion inhibitor, in many central heating systems, irrespective of iron contamination.

## Claims

1. A method of testing central heating and/or cooling system water for the concentration of molybdate, the method comprising the steps of:
using a first colour-change dip test (12a) to test for the concentration of iron in the central heating and/or cooling system water, and comparing the colour of the first colour-change dip test (12a) to an iron testing reference (14a) to assess an iron concentration;
using a second colour-change dip test (one of 12c-12f) to test for the concentration of molybdate in the central heating and/or cooling system water, and comparing the colour of the second colour-change dip test (one of 12c-12f) to a molybdate testing reference (14c-14f), and assessing the molybdate concentration based on the comparison of the second dip test (one of 12c-12f) to the reference (14c-14f), and based on the assessed concentration of iron,
in which the molybdate testing reference (14c-14f) comprises a plurality of colour reference scales, a colour reference scale being selected from the plurality of colour reference scales (14c-14f) to be used in the assessment of molybdate concentration, based on the assessed concentration of iron, and
in which assessment is carried out by image processing software based on a photograph of the colour-change dip tests alongside the references.

2. A method as claimed in claim 1, in which the first colour-change dip test (12a) and the second colour-change dip test (one of 12c-12f) are provided as first and second reagent-impregnated pads on a single carrier (10).

3. A method as claimed in claim 2, in which an absorbent buffer pad (one of 12c-12f) is provided between the first (12a) and second (one of 12c-12f) reagent-impregnated pads.

4. A method as claimed in any of the preceding claims, in which the iron testing reference (14a) and molybdate testing reference (14c-14f) are provided on a single reference card.

5. A method as claimed in any of the preceding claims, in which the software is adapted to acquire a photograph by way of a camera built into the device on which the software is running.

6. A non-transient computer readable medium containing instructions which when executed on a computer processor, carry out the method of any of the preceding claims.

## Patentansprüche

1. Verfahren zum Testen von Wasser eines Zentralheizungs- und/oder -Kühlsystems auf Molybdat-Konzentration, wobei das Verfahren die Schritte umfasst zum:
Verwenden eines ersten Farbwechsel-Dip-Tests (12a), um die Eisenkonzentration im Wasser eines Zentralheizungs- und/oder -Kühlsystems zu testen und Vergleichen der Farbe des ersten Farbwechsel-Dip-Tests (12a) mit einer Eisentestreferenz (14a), um eine Eisenkonzentration zu bewerten;
Verwenden eines zweiten Farbwechsel-Dip-Tests (12c-12f), um die Molybdat-Konzentration im Wasser eines Zentralheizungs- und/oder -Kühlsystems zu testen und Vergleichen der Farbe des zweiten Farbwechsel-Dip-Tests (12c-12f) mit einer Molybdat-Testreferenz (14c-14f) und Bewerten der Molybdat-Konzentration basierend auf dem Vergleich des zweiten Farbwechsel-Dip-Tests (12c-12f) mit der Referenz (14c-14f), und basierend auf der bewerteten Eisenkonzentration,
wobei die Molybdat-Testreferenz (14c-14f) eine Vielzahl von Farbreferenzskalen umfasst, wobei eine Farbreferenzskala aus der Vielzahl von Farbreferenzskalen (14c-14f) ausgewählt wird, die bei der Bewertung der Molybdat-Konzentration basierend auf der bewerteten Eisenkonzentration zu verwenden sind, und
wobei eine Bewertung durch eine Bildverarbeitungs-Software basierend auf einer Fotografie der Farbwechsel-Dip-Tests nebeneinander ausgeführt wird.

2. Verfahren nach Anspruch 1, wobei der erste Farbwechsel-Dip-Test (12a) und der zweite Farbwechsel-Dip-Test (12c-12f) als erstes und zweites mit Reagenzien imprägniertes Pad auf einem einzigen Träger (10) bereitgestellt werden.

3. Verfahren nach Anspruch 2, wobei ein Absorptionsmittelpuffer-Pad (eines von 12c-12f) zwischen dem ersten (12a) und zweiten (eines von 12c-12f) mit Reagenzien imprägnierten Pad bereitgestellt wird.

4. Verfahren nach einem der vorstehenden Ansprüche, wobei die Eisentestreferenz (14a) und die Molybdat-Testreferenz (14c-14f) auf einer einzigen Referenzkarte bereitgestellt werden.

5. Verfahren nach einem der vorstehenden Ansprüche, wobei die Software angepasst ist, um eine Fotografie anhand einer Kamera zu erfassen, die in die Vorrichtung eingebaut ist, in der die Software läuft.

6. Nicht-flüchtiges computerlesbares Medium, das Anweisungen enthält, die, wenn sie von einem Computerprozessor ausgeführt werden, das Verfahren nach einem der vorstehenden Ansprüche ausführen.

## Revendications

1. Procédé d'analyse de la concentration en molybdate d'une eau de système central de chauffage et/ou de refroidissement, le procédé comprenant les étapes suivantes :
utiliser un premier test d'immersion à changement de couleur (12a) pour analyser la concentration en fer dans l'eau de système central de chauffage et/ou de refroidissement, et comparer la couleur du premier test d'immersion à changement de couleur (12a) à une référence de test de fer (14a) pour évaluer une concentration en fer ;
utiliser un deuxième test d'immersion à changement de couleur (l'un de 12c à 12f) pour analyser la concentration en molybdate dans l'eau de système central de chauffage et/ou de refroidissement, et comparer la couleur du deuxième test d'immersion à changement de couleur (l'un de 12c à 12f) à une référence de test de molybdate (14c-14f), et évaluer la concentration en molybdate sur la base de la comparaison du deuxième test d'immersion (l'un de 12c à 12f) à la référence (14c à 14f), et sur la base de la concentration en fer évaluée,
dans lequel la référence de test de molybdate (14c à 14f) comprend une pluralité d'échelles de référence de couleur, une échelle de référence de couleur étant sélectionnée parmi la pluralité d'échelles de référence de couleur (14c à 14f) pour être utilisée dans l'évaluation de la concentration en molybdate, sur la base de la concentration en fer évaluée, et
dans lequel l'évaluation est mise en œuvre par un logiciel de traitement d'image sur la base d'une photographie des tests d'immersion à changement de couleur conjointement aux références.

2. Procédé selon la revendication 1, dans lequel le premier test d'immersion à changement de couleur (12a) et le deuxième test d'immersion à changement de couleur (l'un de 12c à 12f) sont fournis sous forme de premier et deuxième tampons imprégnés de réactif sur un support unique (10) .

3. Procédé selon la revendication 2, dans lequel une plaque de tampon absorbant (l'un de 12c à 12f) est fournie entre les premier (12a) et deuxième (l'un de 12c à 12f) tampons imprégnés de réactif.

4. Procédé selon l'une quelconque des revendications précédentes, dans lequel la référence de test de fer (14a) et la référence de test de molybdate (14c à 14f) sont fournies sur une seule carte de référence.

5. Procédé selon l'une quelconque des revendications précédentes, dans lequel le logiciel est conçu pour acquérir une photographie au moyen d'une caméra intégrée dans le dispositif sur lequel le logiciel est exécuté.

6. Support lisible par ordinateur non transitoire contenant des instructions qui, lorsqu'elles sont exécutées sur un processeur informatique, mettent en œuvre le procédé selon l'une quelconque des revendications précédentes.
